# EUROPEAN PATENT APPLICATION

(11) **EP 1 607 963 A2**
(43) Date of publication of application: **21.12.2005**
(21) Application number: 05252889.0
(22) Date of filing: 11.05.2005
(51) Int. Cl.: G11B 19/12, G11B 7/00

(54) **Method for reproducing optical disc using a single wavelength**

(30) Priority: 15.06.2004 KR 2004044021
(71) Applicant: SAMSUNG ELECTRONICS CO., LTD., Suwon-city, Gyeonggi-do (KR)
(72) Inventor: Jang, Sun-ok, 105-308, Woncheon Jugong Apt., Gyeonggi-do (KR)
(74) Representative: Brandon, Paul Laurence

(57) **Abstract**

A method for reproducing an optical disc using one-wavelength. The method comprises the steps of determining a type of optical disc mounted on an optical disc drive, irradiating light having one-wavelength to any required layer as between a first disc layer and a second disc layer upon a determination that the optical disc is a hybrid disc including the first and second disc layers, and performing a servo control while using the irradiation light and reproducing data recorded on the required layer. Accordingly, data recorded on a DVD layer, and data recorded on a CD layer, may be reproduced using the same wavelength when a hybrid disc is reproduced in accordance with the present invention.

## Description

The present invention relates to methods for reproducing an optical disc using a single, or one-wavelength light. More particularly, but not exclusively, the present invention relates to methods for reproducing data recorded on an optical disc using one-wavelength when a hybrid disc is loaded and detected.

A Hybrid Super Audio Compact Disc (SACD), which is physical combination of a Digital Video Disc (DVD) layer with a Compact Disc (CD) layer, provides audio of higher quality as compared to a typical CD, and is compatible with an optical reproducing apparatus such as a DVD player, CD player, and SACD player.

The SACD player has two laser diodes for reproducing data recorded on the hybrid SACD. Specifically, when the SACD player determines that a hybrid SACD is loaded, it first turns on a DVD laser diode to allow the hybrid SACD to be irradiated with light having about a 650 nm wavelength. When a request for reproducing the CD is received from a user after a predetermined time has passed, the SACD player then turns on a CD laser diode to allow the hybrid SACD to be irradiated with light having about a 780 nm wavelength.

A conventional SACD player also switches from the DVD laser diode to the CD laser diode to perform servo control when the DVD layer is switched to the CD layer to reproduce data. As a result, the user can be required to wait for a substantial period until the CD is reproduced.

Accordingly, a need exists for a method which is capable of reproducing data recorded on the CD layer and data recorded on the DVD layer without requiring such delays.

An aim of preferred embodiments of the present invention is to solve at least the above and other problems and disadvantages, and to provide at least the advantages described below. Accordingly, an aim of preferred embodiments of the present invention is to provide a method for reproducing an optical disc using one-wavelength, such that the device is capable of reproducing data recorded on the CD layer and data recorded on the DVD layer using the same wavelength when a hybrid disc is reproduced.

According to an aspect of the present invention, there is provided a method for reproducing an optical disc using one-wavelength which comprises the steps of determining a type of optical disc mounted on an optical disc drive, irradiating light having one-wavelength to any required layer of a first disc layer and a second disc layer when the optical disc is determined to be a hybrid disc including the first and second disc layers, and performing a servo control while using the irradiation light and reproducing data recorded on the required layer.

More specifically, when it is determined that the optical disc is a hybrid disc, the method may further comprise the steps of identifying a reproduction mode for which a higher priority is set as between a first reproduction mode for reproducing data recorded on the first disc layer, and a second reproduction mode for reproducing data recorded on the second disc layer.

In addition, the method of irradiating the light may further perform the irradiation on the required layer corresponding to the reproduction mode for which a higher priority is set as between the first and second disc layers, and reproducing the data may drive the servo control for the required layer to reproduce data recorded on the required layer.

The light having the one-wavelength may be a light irradiated from a two-wavelength laser diode that irradiates light having a first wavelength corresponding to the first disc layer, and irradiates light having a second wavelength corresponding to the second disc layer.

Alternatively, the light having the one-wavelength may be light having a first wavelength irradiated from a first laser diode as selected from between the first laser diode for irradiating light having the first wavelength corresponding to the first disc layer, and a second laser diode for irradiating light having the second wavelength corresponding to the second disc layer.

In this example, the first disc layer may comprise a digital video disc (DVD) layer, and the second disc layer may comprise a compact disc (CD) layer.

The method may further comprise the steps of receiving a change request from a user interface for switching to a reproduction mode for which a lower priority is set as between the first and second reproduction modes, then irradiating the light having the one-wavelength to a layer other than the required layer as between the first and second disc layers, and performing a servo control for the layer other than the required layer corresponding to the reproduction mode for which the lower priority is set to reproduce data recorded on the layer.

The present invention will become more apparent by describing certain embodiments of the present invention, by way of example only, with reference to the accompanying drawings, in which:

FIG. 1 is a block diagram for illustrating an optical recording and reproducing apparatus for reproducing an optical disc using one-wavelength according to an embodiment of the present invention; and

FIG. 2 is a flow chart for illustrating a method for reproducing the optical disc using the one-wavelength shown in FIG. 1.

Throughout the drawings, like reference numerals will be understood to refer to like parts, components and structures.

Hereinafter, exemplary embodiments of the present invention will be described in greater detail with reference to the accompanying drawings.

In the following descriptions, the same drawing reference numerals are used for the same elements, features and structures throughout the drawings. The matters defined in the description, such as detailed construction and element descriptions, are provided to assist in a comprehensive understanding of the invention. Also, descriptions of well-known functions or constructions are omitted for the sake of clarity.

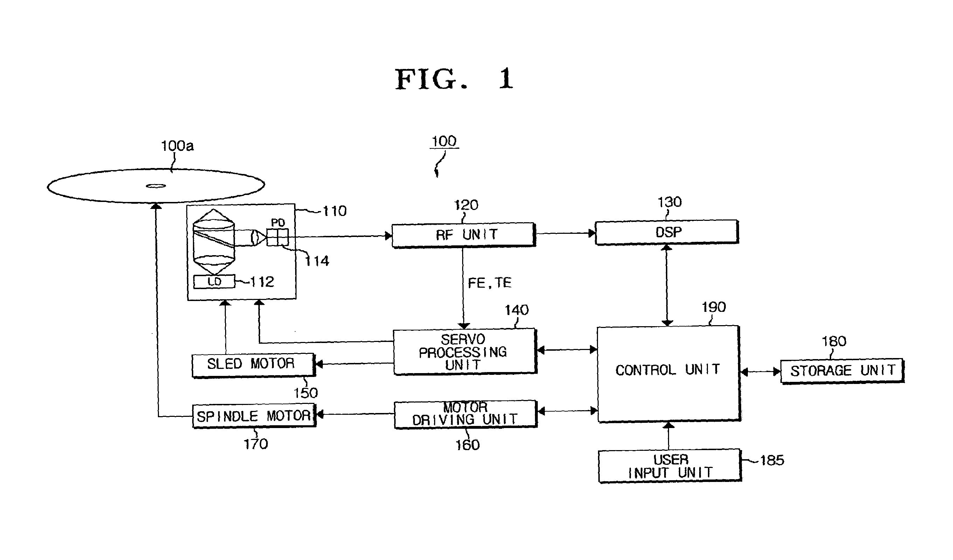

FIG. 1 is a block diagram for illustrating an optical recording and reproducing apparatus for reproducing an optical disc using one-wavelength according to an embodiment of the present invention.

Referring to FIG. 1, an optical recording and reproducing apparatus 100 according to an embodiment of the present invention comprises a pickup unit 110, a radio frequency (RF) unit 120, a digital signal processor 130 (hereinafter, referred to as a DSP), a servo processing unit 140, a sled motor 150, a motor driving unit 160, a spindle motor 170, a storage unit 180, a user input unit 185, and a control unit 190.

The exemplary optical recording and reproducing apparatus 100 shown in FIG. 1 is generally capable of identifying and reproducing a hybrid disc, and only those blocks associated with embodiments of the present invention are shown in the drawings. The hybrid disc is also referred to as a hybrid SACD and includes a DVD layer and a CD layer.

Data in a DVD format is recorded in the DVD layer applied as a first disc layer, and data in a CD format is recorded in the CD layer applied as a second disc layer.

The pickup unit 110 reads in data recorded on the optical disc 100a and generates RF signals. To achieve this, the pickup unit 110 includes a two-wavelength laser diode 112 (hereinafter, referred to as an LD), a photo diode 114 (hereinafter, referred to as a PD) for detecting an amount of light that is irradiated from the two-wavelength LD 112 and reflected on the optical disc 100a, a tracking actuator (not shown) for driving a tracking servo, and a focusing actuator (not shown) for driving a focus servo.

The two-wavelength LD 112 employed in the exemplary embodiment of the present invention adaptively irradiates light having a first wavelength corresponding to the DVD layer, and light having a second wavelength corresponding to the CD layer. In this example, the light having the first wavelength of about 650 nm is used for the DVD layer, and the light having the second wavelength have about 780 nm is used for the CD layer. Accordingly, the two-wavelength LD 112 irradiates light for the DVD layer when it is determined that the optical disc 100a is a DVD, and irradiates light for the CD layer when it is determined that the optical disc 100a is a CD.

In addition, when it is determined that the type of loaded optical disc 100a is a hybrid disc, the two-wavelength LD 112 irradiates light for the DVD layer having one-wavelength. Specifically, the two-wavelength LD 112 irradiates light for the DVD layer having a wavelength of about 650 nm regardless of layers (that is, the first and second disc layers) of the hybrid disc.

The RF unit 120 then amplifies and shapes RF signals output from the pickup unit 110 and outputs them to the DSP 130. In addition, the RF unit 120 generates error signals based on the RF signals, including Focus Error Signals (hereinafter, referred to as FE signals) and Tracking Error Signals (hereinafter, referred to as TE signals), to be output to the servo processing unit 140.

The DSP 130 digitizes signals output from the RF unit 120 to be output as reproducible signals, and digitizes data for recording to also be output as recordable signals.

The servo processing unit 140 digitizes the FE signals and TE signals output from the RF unit 120 to generate focus servo control signals (FO), tracking servo control signals (TR), and sled servo control signals (SL). In addition, the servo processing unit 140 generates driving signals in response to each of the generated servo control signals FO, TR, and SL to drive the pickup unit 110 and the sled motor 150. Each of servo control signals FO, TR, and SL is a control signal for compensating for an error between the FE signal and the TE signal, and for performing the servo control.

In this example, the servo processing unit 140 generates servo control signals FO, TR, and SL that are different from one another depending upon the type of the optical disc 100a.

The sled motor 150 moves the pickup unit 110 in a horizontal direction based on the driving signal of the servo processing unit 140.

The motor driving unit 160 outputs a driving signal for rotating or stopping the spindle motor 170 based on the rotation or stop signal output from the control unit 190.

The spindle motor 170 rotates or stops the optical disc 100a based on the driving signal output from the motor driving unit 160.

The storage unit 180 stores priorities applied to a first reproduction mode for reproducing data recorded on the DVD layer, and a second reproduction mode for reproducing data recorded on the CD layer, when a hybrid disc is loaded. As a result, when a hybrid disc is loaded, the control unit 190 identifies the priorities stored in the storage unit 180 and controls the servo processing unit 140 so as to detect data from the layer corresponding to the reproduction mode in which a higher priority is set.

The user input unit 185 comprises a user interface that outputs signals to the control unit 190 for selecting or performing a function supported by the optical recording and reproducing apparatus 100. To achieve this, the user input unit 180 has a plurality of operating keys (not shown), and where desired, a remote control (not shown) may be employed for providing a substantially similar function. In the exemplary embodiment of the present invention, the user input unit 185 can also be used to request a switch from the DVD reproduction mode to the CD reproduction mode, or vice versa.

The control unit 190 controls the total operations of the optical recording and reproducing apparatus 100 based on various control programs stored in a memory (not shown). For example, the control unit 190 processes data to be recorded on the loaded optical disc 100a, or processes data recorded on the optical disc 100a to be reproduced.

The control unit 190 determines the type of optical disc 100a and outputs the determined signal to the servo processing unit 140 based on the FE signal output from the servo processing unit 140.

The optical disc 100a is primarily classified as a CD, DVD, or SACD. In this example, the CD and DVD are further classified into dedicated reproduction discs such as CD-read only memory (ROM) and DVD-ROM, discs capable of being recorded one time such as a CD-Recordable (R) and DVD-R, and discs capable of being rewritten such as CD-Rewritable (RW) and DVD-random access memory (RAM). In comparison, the SACD discs are not classified into such categories as CD-R, DVD-R, CD-RW, and so forth.

When the reproduction mode or the recording mode is selected by the user input unit 185 after the type of loaded optical disc 100a is determined, the control unit 190 performs operations for determining an optimal bias power suitable for the type of optical disc 100a and the selected mode.

More specifically, when the type of optical disc 100a is determined, the control unit 190 outputs the determined type of optical disc 100a to the servo processing unit 140. Accordingly, the servo processing unit 140 controls the two-wavelength LD 112 to have the two-wavelength LD 112 irradiate light suitable for the type of optical disc 100a under the control of the control unit 190.

According to an exemplary embodiment of the present invention, when it is determined that the type of optical disc 100a is a hybrid disc, the control unit 190 identifies the reproduction mode in which a higher priority is set by means of the storage unit 180 as between the first reproduction mode for reproducing data recorded on the DVD layer, and the second reproduction mode for reproducing data recorded on the CD layer.

The control unit 190 outputs to the servo processing unit 140, the information regarding the reproduction mode in which the higher priority is set, the type of the optical disc 100a, and the control signal for having light of one-wavelength irradiated on the hybrid disc. Specifically, the control unit 190 outputs to the servo processing unit 140, the control signal for allowing light to be irradiated on the layer determined to correspond to the reproduction mode in which the higher priority is set, and the type of the optical disc 100a.

The servo processing unit 140 controls the two-wavelength LD 112 so as to have light for the DVD irradiated on the determined layer, and sets the servo to a driving manner suitable for the reproduction mode in which the higher priority is set under the control of the control unit 190. Specifically, the servo processing unit 140 drives the servo control for the determined layer and uses light for the DVD, and further drives the pickup unit 110 so as to detect data recorded on the determined layer. Accordingly, the data recorded on the determined layer is reproduced.

When it is determined that the optical disc 100a is a CD, the servo processing unit 140 controls the two-wavelength LD 112 to have light for a CD irradiated, and sets the servo to a driving manner suitable for the CD reproduction mode.

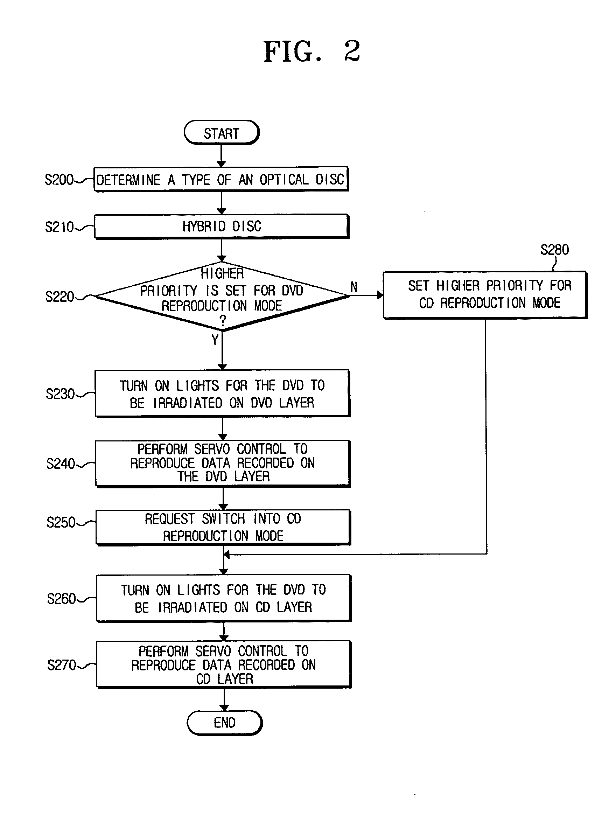

FIG. 2 is a flow chart for illustrating a method for reproducing the optical disc using the one-wavelength apparatus shown in FIG. 1.

Referring to FIGS. 1 and 2, the control unit 190 determines the type of loaded optical disc 100a based on the FE signal at step S200. The FE signal may be identified from an S-curve generated when the focusing servo is controlled, which is well known in the art therefore a detailed description thereof will be omitted.

When it is determined that the optical disc 100a is a hybrid disc at step S210, the control unit 190 identifies the reproduction mode in which a higher priority is set as between the DVD reproduction mode and the CD reproduction mode at step S220. Each priority, set per reproduction mode, is stored in the storage unit 180, and the predetermined priority may be changed by an interface operation of the user.

In step S220, when it is determined that the DVD reproduction mode is given a higher priority, the control unit 190 controls the servo processing unit 140 to turn on light for the DVD to be irradiated on the DVD layer at step S230. To achieve this, the control unit 190 outputs to the servo processing unit 140, the type of optical disc 100a and the control signal for having the two-wavelength LD 112 irradiate light for the DVD when the loaded optical disc 100a is a hybrid disc. As a result, the servo processing unit 140 drives the two-wavelength LD 112 to have the two-wavelength LD 112 irradiate light for the DVD on the DVD layer.

After step S230 is performed, the servo processing unit 140 drives the servo control for the DVD layer and uses light for the DVD to detect data recorded on the DVD layer, which in turn, allows the data recorded on the DVD layer to be reproduced at step S240.

After step S240 is performed, a request can be received from the user input unit 185 at step S250 for switching to the CD reproduction mode having a lower priority, and the control unit 190 then controls the servo processing unit 140 to turn on light for the DVD to be irradiated on the CD layer at step S260. Accordingly, in the exemplary embodiment of the present invention, the light for the DVD may still be used even though the reproduction mode has been changed.

The servo processing unit 140 then drives the servo in a manner suitable for the CD reproduction mode while using light for the DVD to detect data recorded on the CD layer, so that the data recorded on the CD layer is reproduced at step S270.

When it is determined from step S220 that a higher priority is not set for the DVD reproduction mode, it is determined that a higher priority is set for the CD reproduction mode at step S280, and the control unit 190 controls the servo processing unit 140 to perform the steps S260 and S270.

Embodiments of the present invention may also employ a dedicated LD for the DVD (not shown) and a dedicated LD for the CD (not shown), as well as the two-wavelength LD 112. That is, in yet other embodiments of the present invention, the device may have a separate optical system for the DVD and a separate optical system for the CD to reproduce and record data on the optical disc 100a.

As noted above, in accordance with the exemplary method for reproducing the optical disc using the one-wavelength, light for the DVD is irradiated not only on the DVD layer, but also on the CD layer to reproduce data when a hybrid disc is loaded. That is, even when the DVD layer is changed to the CD layer while the DVD layer is reproduced, the same light for the DVD may still be employed, which allows data recorded on the CD layer to be rapidly reproduced.

In particular, when preferred embodiments of the present invention are applied to a dedicated hybrid SACD player, a single two-wavelength LD may be employed to reproduce the hybrid SACD, which allows the dedicated player to be implemented with a more simplified configuration and a lower cost.

The foregoing embodiments and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for reproducing an optical disc (100a) using one-wavelength, comprising the steps of:
determining a type of an optical disc mounted on an optical disc drive;
irradiating light having one-wavelength to a required layer, wherein the required layer comprises at least one of a first disc layer and a second disc layer, upon a determination that the optical disc is a hybrid disc including the first and second disc layers; and
performing a servo control while using the irradiation light and reproducing data recorded on the required layer.

2. The method as recited in claim 1, further comprising the steps of:
identifying a reproduction mode for which a higher priority is set, wherein the identified mode comprises at least one of a first reproduction mode for reproducing data recorded on the first disc layer, and a second reproduction mode for reproducing data recorded on the second disc layer.

3. The method as recited in claim 2, further comprising the step of identifying the reproduction mode upon the determination that the optical disc is a hybrid disc.

4. The method as recited in claim 2, wherein the step of irradiating light further comprises the step of:
performing the irradiation on the required layer corresponding to the reproduction mode for which a higher priority is set, wherein the required layer comprises at least one of the first and second disc layers.

5. The method as recited in claim 4, wherein the step of reproducing the data further comprises the step of performing the servo control for the required layer to reproduce data recorded on the required layer.

6. The method as recited in any preceding claim, wherein the light having the one-wavelength comprises at least one of a:
light having a first wavelength irradiated from a two-wavelength laser diode that irradiates light having the first wavelength and corresponding to the first disc layer; and
light having a second wavelength irradiated from the two-wavelength laser diode that irradiates light having the second wavelength and corresponding to the second disc layer.

7. The method as recited in any one of claims 1-5, wherein the light having the one-wavelength comprises at least one of a:
light having a first wavelength irradiated from a first laser diode that irradiates light having the first wavelength corresponding to the first disc layer; and
light having a second wavelength irradiated from a second laser diode that irradiates light having the second wavelength corresponding to the second disc layer.

8. The method as recited in any preceding claim, wherein the first disc layer comprises a digital video disc layer, and the second disc layer comprises a compact disc layer.

9. The method as recited in claim 2, further comprising the step of receiving from a user interface a change request for switching between a first and second reproduction mode.

10. The method as recited in claim 2, further comprising the steps of:
receiving from a user interface a change request for switching to a reproduction mode for which a lower priority is set, wherein the reproduction mode comprises at least one of the first and second reproduction modes;
irradiating the light having the one-wavelength to a layer other than the required layer, wherein the layer comprises at least one of the first and second disc layers; and
performing a servo control on the layer other than the required layer corresponding to the reproduction mode for which the lower priority is set to reproduce data recorded on the layer.
